# EUROPEAN PATENT APPLICATION

(11) **EP 4 814 895 A1**
(43) Date of publication of application: **30.09.2026**
(21) Application number: 26161976.1
(22) Date of filing: 03.03.2026
(51) Int. Cl.: G06V 10/82, G06N 3/045, G06V 20/13

(54) **METHODS AND SYSTEMS FOR CROSS-DOMAIN BASED CHANGE DETECTION OF REGION DUE TO AN EVENT**

(30) Priority: 27.03.2025 IN 202521029288
(71) Applicant: Tata Consultancy Services Limited, Maharashtra (IN)
(72) Inventor: GHOSH, Shubhrangshu, 700160 Kolkata, West Bengal (IN); ISLAM, Syed Mujibul, 700160 Kolkata, West Bengal (IN); ROY CHOUDHURY, Abhishek, 700160 Kolkata, West Bengal (IN); PAL, Arpan, 700160 Kolkata, West Bengal (IN)
(74) Representative: Goddar, Heinz J.

(57) **Abstract**

The disclosure relates generally to methods and systems for cross-domain based change detection of region due to an event. Conventional techniques on cross-domain change detection (CDCD) rely on transformation-based approaches involving two tasks: image translation from one modal to another modal (SAR to optical) and then performing the change detection (CD) in one of the translated modals (for example, in SAR or optical). The methods and system of the present disclosure propose a deep-learning (DL) architecture called ReFUjetNet leverages generic embeddings from the extensively pre-trained domain adaptive foundation model alongside locally trained embeddings. The ReFUjetNet efficiently fuses these embeddings and employs a Kolmogorov-Arnold Network (KAN)-based convolutional neural network (CNN) classifier to generate a binary change matrix, which is then joined with another binary change matrix derived from the Gabor jet-based dissimilarity checker, resulting in the final binary change map.

## Description

### CROSS-REFERENCE TO RELATED APPLICATIONS AND PRIORITY

The present application claims priority from Indian provisional application no. 202521029288, filed on March 27, 2025.

### TECHNICAL FIELD

The disclosure herein generally relates to change detection, and, more particularly, to methods and systems for cross-domain based change detection of region due to an event.

### BACKGROUND

Change detection (CD) of a predefined region due to an event such as floods, forest fire, landslide, earthquakes, and so on, is a key research area in remote image sensing including an active remote sensing and a passive remote sensing. The active remote sensing transmits and measures an electromagnetic radiation emitted and reflected, while the passive remote sensing only measures the reflected radiation from a target. The active remote sensing includes Light detection and ranging (Lidar), Synthetic aperture radar (SAR), and so on. The passive remote sensing includes optical imaging, electro-optical imaging which further include Red-Green-Blue (RGB), multi-spectral imaging (for example, infrared (IR)), hyper spectral imaging, and so on.

With advances in imaging techniques, cross-domain CD (CDCD) has gained significant attention. The CDCD is defined as the change detection (CD) between two domains (or also referred as 'modalities' and interchangeably used based on the context) including within the active remote sensing (for example, between the Lidar and SAR), or within the passive remote sensing (for example, between the RGB and IR, between the multi-spectral and the hyper spectral, and so on), or between the active remote sensing and the passive remote sensing (for example, between the optical and SAR, Lidar and hyper spectral, and so on). However, the CDCD is challenging due to their differing modalities, which provide complementary information especially between the active remote sensing and the passive remote sensing modalities (for example, between the optical and SAR modalities, Lidar and hyper spectral modalities, and so on).

Conventional techniques on the CDCD rely on transformation-based approaches involving two tasks: image translation from one modal to another modal (SAR to optical) and then performing the change detection (CD) in one of the translated modals (for example, in SAR or optical). Recent multi-tasking approaches reduce the gap of using two different tasks but demand highly compute-intensive training due to complex generative models. Recently, several studies have explored the CDCD using foundation models. However, these foundation models either lack the use of a pure remote-sensing foundation model (one built entirely using remote sensing data) or are not suited for the change detection (CD) involving two different modalities (for example, between SAR and optical images).

### SUMMARY

Embodiments of the present disclosure present technological improvements as solutions to one or more of the above-mentioned technical problems recognized by the inventors in conventional systems.

In an aspect, a processor-implemented method for cross-domain based change detection of region due to an event is provided. The method comprising: receiving (i) a plurality of first images in a first domain (*first_domain*), and (ii) a plurality of second images in a second domain (*second_domain*), of a spatio-temporal region in which one or more changes occurred due to one or more events; pre-processing the plurality of first images and the plurality of second images, using one or more image processing techniques, to obtain a plurality of pre-processed first images and a plurality of pre-processed second images, respectively; generating a plurality of one-dimensional first image embeddings (*F_{first_domain}*) and a plurality of one-dimensional second image embeddings (*F_{second_domain}*), from the plurality of pre-processed first images and the plurality of pre-processed second images, respectively, using a domain adaptive foundation model; generating (i) a plurality of multi-dimensional encoder first image embeddings (*U_{first_domain}*) and a plurality of multi-dimensional decoder first image embeddings (*D_{first_domain}*) from the plurality of pre-processed first images, (ii) a plurality of multi-dimensional encoder second image embeddings (*U_{second_domain}*) and a plurality of multi-dimensional decoder second image embeddings (*D_{second_domain}*) from the plurality of pre-processed second images, using an encoder unit (SUN-Enc) and a decoder unit (SUN-Dec) of a Siamese UNET (SUN); generating a first binary change map (*M_{G}*) from the plurality of multi-dimensional decoder first image embeddings (*D_{first_domain}*) and the plurality of multi-dimensional decoder second image embeddings (*D_{second_domain}*)*,* using a Gabor jet based Dissimilarity Checker (GDC); generate a second binary change map (*M_{K}*) from the plurality of multi-dimensional encoder first image embeddings (*U_{first_domain}*), the plurality of multi-dimensional encoder second image embeddings (*U_{second_domain}*), the plurality of one-dimensional first image embeddings (*F_{first_domain}*), and the plurality of one-dimensional second image embeddings (*F_{second_domain}*), using a Kolmogorov-Amold Network (KAN)-based Convolutional Neural Network (CNN) classifier (KCC); determining a binary change detection map from the first binary change map (*M_{G}*) and the second binary change map (*M_{K}*)*,* by element-wise multiplication; and detecting the one or more changes occurred due to the one or more events in the spatio-temporal region, from the binary change detection map.

In another aspect, a system for cross-domain based change detection of region due to the event is provided. The system includes: a memory storing instructions; one or more Input/Output (I/O) interfaces; and one or more hardware processors coupled to the memory via the one or more I/O interfaces, wherein the one or more hardware processors are configured by the instructions to: receive (i) a plurality of first images in a first domain (*first_domain*)*,* and (ii) a plurality of second images in a second domain (*second_domain*)*,* of a spatio-temporal region in which one or more changes occurred due to one or more events; pre-process the plurality of first images and the plurality of second images, using one or more image processing techniques, to obtain a plurality of pre-processed first images and a plurality of pre-processed second images, respectively; generate a plurality of one-dimensional first image embeddings (*F_{first_domain}*) and a plurality of one-dimensional second image embeddings (*F_{second_domain}*), from the plurality of pre-processed first images and the plurality of pre-processed second images, respectively, using a domain adaptive foundation model; generate (i) a plurality of multi-dimensional encoder first image embeddings (*U_{first_domain}*) and a plurality of multi-dimensional decoder first image embeddings (*D_{first_domain}*) from the plurality of pre-processed first images, (ii) a plurality of multi-dimensional encoder second image embeddings (*U_{second_domain}*) and a plurality of multi-dimensional decoder second image embeddings (*D_{second_domain}*) from the plurality of pre-processed second images, using an encoder unit (SUN-Enc) and a decoder unit (SUN-Dec) of a Siamese UNET (SUN); generate a first binary change map (*M_{G}*) from the plurality of multi-dimensional decoder first image embeddings (*D_{first_domain}*) and the plurality of multi-dimensional decoder second image embeddings (*D_{second_domain}*)*,* using a Gabor jet based Dissimilarity Checker (GDC); generate a second binary change map (*M_{K}*) from the plurality of multi-dimensional encoder first image embeddings (*U_{first_domain}*)*,* the plurality of multi-dimensional encoder second image embeddings (*U_{second_domain}*)*,* the plurality of one-dimensional first image embeddings (*F_{first_domain}*) and the plurality of one-dimensional second image embeddings (*F_{second_domain}*) using a Kolmogorov-Arnold Network (KAN)-based Convolutional Neural Network (CNN) classifier (KCC); determine a binary change detection map from the first binary change map (*M_{G}*) and the second binary change map (*M_{K}*)*,* by element-wise multiplication; and detect the one or more changes occurred due to the one or more events in the spatio-temporal region, from the binary change detection map.

In yet another aspect, there are provided one or more non-transitory machine-readable information storage mediums comprising one or more instructions which when executed by one or more hardware processors cause: receiving (i) a plurality of first images in a first domain (*first_domain*), and (ii) a plurality of second images in a second domain (*second_domain*), of a spatio-temporal region in which one or more changes occurred due to one or more events; pre-processing the plurality of first images and the plurality of second images, using one or more image processing techniques, to obtain a plurality of pre-processed first images and a plurality of pre-processed second images, respectively; generating a plurality of one-dimensional first image embeddings (*F_{first_domain}*) and a plurality of one-dimensional second image embeddings (*F_{second_domain}*), from the plurality of pre-processed first images and the plurality of pre-processed second images, respectively, using a domain adaptive foundation model; generating (i) a plurality of multi-dimensional encoder first image embeddings (*U_{first_domain}*) and a plurality of multi-dimensional decoder first image embeddings (*D_{first_domain}*) from the plurality of pre-processed first images, (ii) a plurality of multi-dimensional encoder second image embeddings (*U_{second_domain}*) and a plurality of multi-dimensional decoder second image embeddings (*D_{second_domain}*) from the plurality of pre-processed second images, using an encoder unit (SUN-Enc) and a decoder unit (SUN-Dec) of a Siamese UNET (SUN); generating a first binary change map (*M_{G}*) from the plurality of multi-dimensional decoder first image embeddings (*D_{first_domain}*) and the plurality of multi-dimensional decoder second image embeddings (*D_{second_domain}*)*,* using a Gabor jet based Dissimilarity Checker (GDC); generating a second binary change map (*M_{K}*) from the plurality of multi-dimensional encoder first image embeddings (*U_{first_domain}*)*,* the plurality of multi-dimensional encoder second image embeddings (*U_{second_domain}*)*,* the plurality of one-dimensional first image embeddings (*F_{first_domain}*) and the plurality of one-dimensional second image embeddings (*F_{second_domain}*) using a Kolmogorov-Arnold Network (KAN)-based Convolutional Neural Network (CNN) classifier (KCC); determining a binary change detection map from the first binary change map (*M_{G}*) and the second binary change map (*M_{K}*)*,* by element-wise multiplication; and detecting the one or more changes occurred due to the one or more events in the spatio-temporal region, from the binary change detection map.

In an embodiment, the plurality of first images received in the first domain (*first_domain*) is of the spatio-temporal region before the one or more events occurred, and the plurality of second images received in the second domain (*second_domain*) is of the spatio-temporal region after the one or more events occurred.

In an embodiment, the first binary change map (*M_{G}*) is generated from the plurality of multi-dimensional decoder first image embeddings (*D_{first_domain}*) and the plurality of multi-dimensional decoder second image embeddings (*D_{second_domain}*)*,* using the Gabor jet based Dissimilarity Checker (GDC), by: obtaining a plurality of uni-channel decoder first image embeddings ( ${D}_{first _ domain}^{′}$) and a plurality of uni-channel decoder second image embeddings ( ${D}_{second _ domain}^{′}$), from the plurality of multi-dimensional decoder first image embeddings (*D_{first_domain}*) and the plurality of multi-dimensional decoder second image embeddings (*D_{second_domain}*)*,* respectively; generating a first Gabor grid graph (*G_{first_domain}*) and a second Gabor grid graph (*G_{second_domain}*)*,* from the plurality of uni-channel decoder first image embedding ( ${D}_{first _ domain}^{′}$) and the plurality of uni-channel decoder second image embeddings ( ${D}_{second _ domain}^{′}$)*,* respectively, using a Gabor transformation; and generating the first binary change map (*M_{G}*) from the first Gabor grid graph (*G_{first_domain}*) and the second Gabor grid graph (*G_{second_domain}*), using a distancing technique.

In an embodiment, the second binary change map (*M_{K}*) is generated from the plurality of multi-dimensional encoder first image embeddings (*U_{first_domain}*)*,* the plurality of multi-dimensional encoder second image embeddings (*U_{second_domain}*), the plurality of one-dimensional first image embeddings (*F_{first_domain}*), and the plurality of one-dimensional second image embeddings (*F_{second_domain}*), using the KAN-based CNN classifier (KCC), by: projecting the plurality of one-dimensional first image embeddings (*F_{first_domain}*)*,* and the plurality of one-dimensional second image embeddings (*F_{second_domain}*) to obtain a plurality of one-dimensional projected first image embeddings ( ${F}_{first _ domain}^{′}$), and a plurality of one-dimensional projected second image embeddings ( ${F}_{second _ domain}^{′}$), respectively; layer-wise concatenating the plurality of multi-dimensional encoder first image embeddings (*U_{first_domain}*) and the plurality of one-dimensional projected first image embeddings ( ${F}_{first _ domain}^{′}$), to obtain a plurality of concatenated first image embeddings (*C_{first_domain}*); layer-wise concatenating the plurality of multi-dimensional encoder second image embeddings (*U_{second_domain}*) and the plurality of one-dimensional projected second image embeddings ( ${F}_{second _ domain}^{′}$) to obtain a plurality of concatenated second image embeddings (*C_{second_domain}*); fusing the plurality of concatenated first image embeddings (*C_{first_domain}*) and the plurality of concatenated second image embeddings (*C_{second_domain}*), to obtain a plurality of concatenated fuse image embeddings (*S_{W}*); and passing the plurality of concatenated fuse image embeddings (*S_{W}*) to the KAN-based CNN classifier (KCC), to generate the second binary change map (*M_{K}*).

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 is an exemplary block diagram of a system for cross-domain based change detection of region due to an event, in accordance with some embodiments of the present disclosure.
FIG. 2 is an exemplary block diagram of a deep-learning (DL)-based architecture (ReFUjetNet), for cross-domain based change detection of region due to the event, in accordance with some embodiments of the present disclosure.
FIGS. 3A and 3B illustrate exemplary flow diagrams of a processor-implemented method for cross-domain based change detection of region due to the event, using the system of FIG. 1, in accordance with some embodiments of the present disclosure.
FIG. 4 is an exemplary block diagram of a Gabor jet based Dissimilarity Checker (GDC), in accordance with some embodiments of the present disclosure.
FIG. 5 is a flowchart showing the steps for generating a first binary change map (*M_{G}*) using the Gabor jet based Dissimilarity Checker (GDC) of FIG. 4, in accordance with some embodiments of the present disclosure.
FIG. 6 is a flowchart showing the steps for generating a second binary change map (*M_{K}*) using a Kolmogorov-Arnold Network (KAN)-based Convolutional Neural Network (CNN) classifier (KCC), in accordance with some embodiments of the present disclosure.
FIG. 7 shows comparison results of the binary change-maps of a few samples from a first dataset and a second dataset, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The terms or expressions such as 'domain', modal', and 'modality' are used interchangeably based on the context and the application of the present disclosure, otherwise such terms or expressions refer to different remote image sensing techniques of an active image sensing, a passive image sensing, and a like.

Change detection (CD) is a well-established and widely studied topic in remote sensing applications, involves using multi-temporal images of the same region (geo-location) to detect differences in ground objects. The remote sensing includes the active remote sensing and the passive remote sensing. The active remote sensing transmits and measures an electromagnetic radiation emitted and reflected, while the passive remote sensing only measures the reflected radiation from a target. The active remote sensing includes Light detection and ranging (Lidar), Synthetic aperture radar (SAR), and so on. The passive remote sensing includes optical imaging, electro-optical imaging which further include Red-Green-Blue (RGB), multi-spectral imaging (for example, infrared (IR)), hyper spectral imaging, and so on.

The change detection (CD) of a predefined region (geo-location, geographical region, and so on) finds broad applications, especially due to an event such as floods, forest fire, landslide, earthquakes, and so on, the applications including but are not limited to natural disaster management, resource surveys, and urban planning. With advances in imaging techniques, cross-domain CD (CDCD) has gained significant attention. The CDCD is defined as the change detection (CD) between two domains (or also referred as 'modalities' and interchangeably used based on the context) including within the active remote sensing (for example, between the Lidar and SAR), or within the passive remote sensing (for example, between the RGB and IR, between the multi-spectral and the hyper spectral, and so on), or between the active remote sensing and the passive remote sensing (for example, between the optical and SAR, Lidar and hyper spectral, and so on).

The CDCD is challenging due to their differing modalities, which provide complementary information especially between the active remote sensing and the passive remote sensing modalities (for example, between the optical and SAR modalities, Lidar and hyper spectral modalities, and so on). Some of the technical challenges in the CDCD are:
1. Differences in heterogeneous features: For example, optical images capture objects' ability to reflect solar radiation, while SAR images reflect their ability to scatter actively emitted electromagnetic waves. Consequently, input images provide distinct observations of the same object and are not directly comparable.
2. Noise impact: For example, noise degrades the quality of both optical and SAR images. Optical images are predominantly affected by radiometric noise, whereas SAR images are mainly influenced by salt-and-pepper noise, and building occlusion
3. Geometric and visual appearance variations: For example, optical sensors generally capture images through downward viewing, while SAR sensors acquire images via side viewing, causing geometric discrepancies for the same

Over the past decades, various CDCD techniques have been developed to tackle the aforementioned technical challenges. Noise tolerant multi-value estimation techniques have been applied in traditional transformations, such as homogeneous pixel transformation (HPT). Deep-learning-based transformations for heterogeneous change detection (CD) have achieved promising results, including symmetric deep convolutional coupling network (SCCN), conditional generative adversarial network (cGAN), X-Net, ACE-Netc, deep translation-based change detection (CD) network (DTCDN), multitask change detection network (MTCDN), and so on. These conventional techniques translate images into the same feature space for accurate change detection (CD) results.

Recently, several approaches have explored remote sensing change detection (CD) using foundation models. However, these approaches either lack the use of a pure remote-sensing foundation model (one built entirely using remote sensing data) or are not suited for change detection (CD) in cross-domain applications such as optical and SAR images. Meanwhile, a foundation model tailored for spectral remote sensing and pre-trained on large-scale spectral data (SpectralGPT), supports various remote sensing tasks, including the change detection. However, it is limited to hyperspectral data and cannot be applied to the change detection (CD) between the optical and SAR images.

Except a few instances, the utilization of the Gabor jet concept as a similarity checker within a deep learning framework remains exceptionally uncommon in the field of remote sensing. Further, conventional techniques utilizing the Gabor jet concept as a dissimilarity checker within a unified deep learning architecture that also incorporates the foundation models for the change detection between two modalities such as SAR and optical images.

The present disclosure solves the technical problems in the art with the methods and systems for cross-domain based change detection of region due to an event. The methods and system of the present disclosure propose a deep-learning (DL) architecture called ReFUjetNet, which integrates a pre-trained domain adaptive foundation model with a locally trainable Siamese U-Net and a Gabor jet-based dissimilarity checker in a single network for change detection between two cross-domain sensing images such as between optical and SAR images. The approach of the present disclosure leverages generic embeddings from the extensively pre-trained domain adaptive foundation model alongside locally trained embeddings. The ReFUjetNet efficiently fuses these embeddings and employs a Kolmogorov-Arnold Network (KAN)-based convolutional neural network (CNN) classifier to generate a binary change matrix, which is then joined with another binary change matrix derived from the Gabor jet-based dissimilarity checker, resulting in the final binary change map.

The primary motivation behind using Gabor jet concept with the pre-trained domain adaptive foundation mode within a unified deep learning framework is to harness insights from two complementary approaches: the advanced domain adaptive foundation model approach and the traditional Gabor jet concept. By combining these, the framework ReFUjetNet identifies changes only in regions where both approaches concur, ensuring greater reliability in detecting changes between two different domain images (for example, optical and SAR images) in remote image sensing.

The ReFUjetNet of the present disclosure makes distinctive use of the Siamese U-Net by fusing encoder outputs to produce the pre-trained domain adaptive foundation model based binary change matrix and utilizing decoder outputs to create the Gabor jet-based binary change matrix. The innovative incorporation of Gabor jet concept as a dissimilarity checker, alongside the cutting-edge pre-trained domain adaptive foundation model-based approach within a unified deep learning framework, lends the ReFUjetNet its distinctive edge.

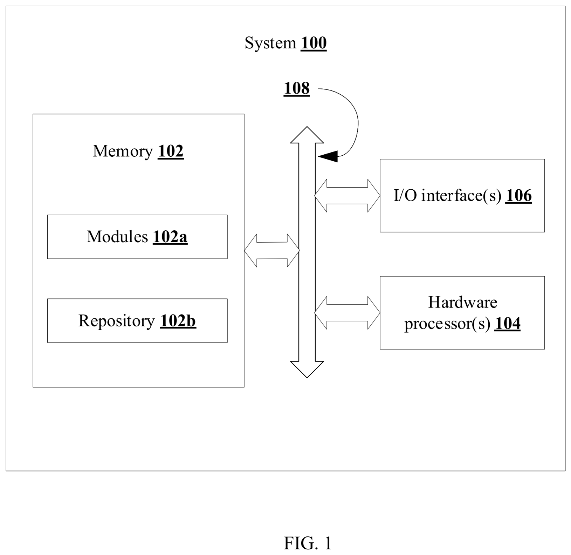

Referring now to the drawings, and more particularly to FIG. 1 through FIG. 7, where similar reference characters denote corresponding features consistently throughout the figures, there are shown preferred embodiments, and these embodiments are described in the context of the following exemplary systems and/or methods.

FIG. 1 is an exemplary block diagram of a system 100 for cross-domain based change detection of region due to an event, in accordance with some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface (GUI), and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computers, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. In an embodiment, the plurality of modules 102a can include various sub-modules (not shown in FIG. 1). Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

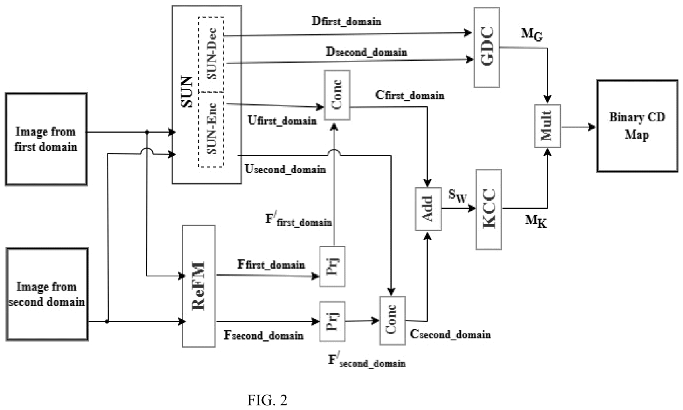

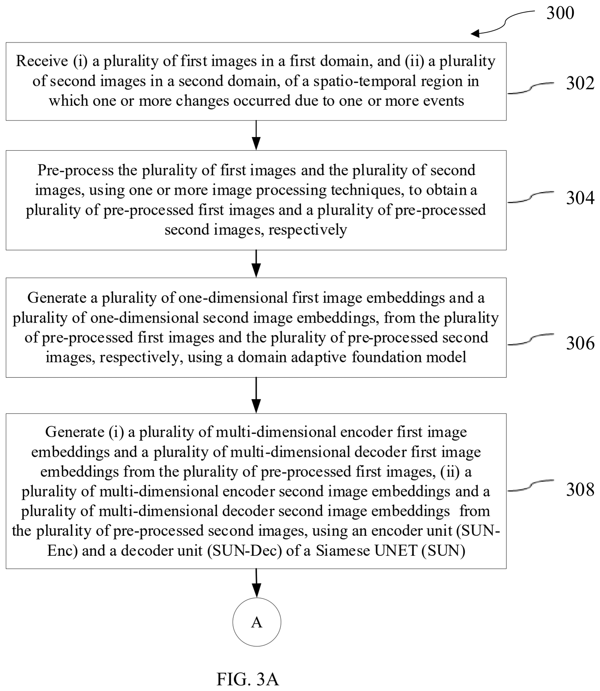

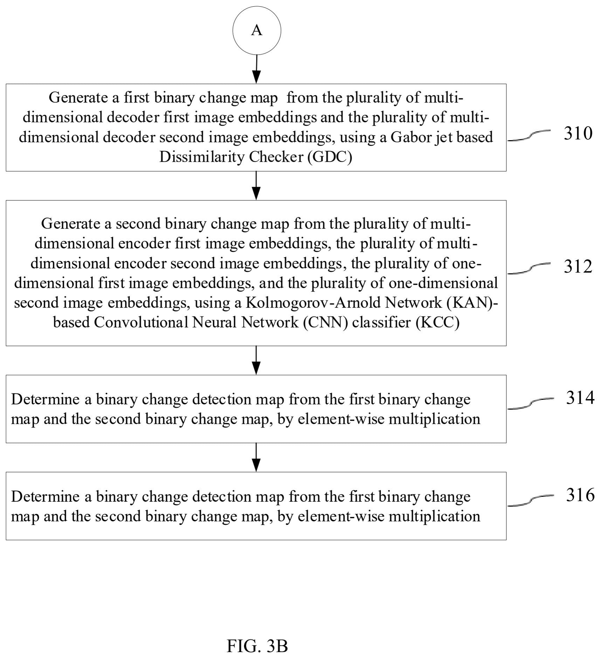

Referring collectively to FIG. 2 and FIGS. 3A and 3B, components and functionalities of the system 100 are described in accordance with an example embodiment of the present disclosure. For example, FIG. 2 is an exemplary block diagram of a deep-learning (DL)-based architecture (ReFUjetNet), for cross-domain based change detection of region due to the event, in accordance with some embodiments of the present disclosure. As shown in FIG. 2, the deep-learning (DL)-based architecture (ReFUjetNet) includes a domain adaptive foundation model such as a Remote-sensing Foundation model (ReFM) with a Siamese UNET (SUN), Gabor jet-based dissimilarity checker (GDC), and a Kolmogorov-Arnold Network (KAN)-based Convolutional Neural Network (CNN) classifier (KCC). In an embodiment, a dynamic One-For-All (DOFA) model was considered as the ReFM due to its proven adaptability across multiple modalities (for example, SAR and optical images) with extensive pretraining. The DOFA model was used without additional fine-tuning of the training data.

For example, FIGS. 3A and 3B illustrate exemplary flow diagrams of a processor-implemented method 300 for cross-domain based change detection of region due to the event, using the system 100 of FIG. 1, in accordance with some embodiments of the present disclosure. Although steps of the method 300 including process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

At step 302 of the method 300, the one or more input/output (I/O) interfaces 106 of the system 100 are configured to receive (i) a plurality of first images in a first domain, and (ii) a plurality of second images in a second domain, of a spatio-temporal region in which one or more changes occurred due to one or more events. In an embodiment, the spatio-temporal region is a predefined geo-location, a predefined geographic region, or any other region which may tend to change over time spatially due to the one or more events. The spatio-temporal region is defined with predefined boundaries (for example, latitudes and longitudes).

In an embodiment, the one or more events are made-made events or natural events that may occur for various reasons and the one or more events depend on the applications including but are not limited to natural disaster management, resource surveys, and urban planning. For example, in case of natural disaster management, the one or more events include but are not limited to floods, forest fire, landslide, and earthquakes. Similarly, in case of urban planning, building constructions, land encroachments, lake encroachments, and so on.

The plurality of first images received in the first domain is of the spatio-temporal region before the one or more events occurred. The plurality of second images received in the second domain is of the spatio-temporal region after the one or more events occurred. Thus, the plurality of first images and the plurality of second images are the set of respective images before and after the one or more events occurred. For example, the plurality of first images received in the first domain is the images before the floods occurred in the predefined spatio-temporal region, whereas the plurality of second images received in the second domain is the images after the floods occurred in the predefined spatio-temporal region, or vice versa.

The first domain and the second domain refereed to two different remote image sensing techniques (cross-domain) from the active remote sensing and the passing remote sensing, or other remote sensing techniques. The active remote sensing includes Light detection and ranging (Lidar), Synthetic aperture radar (SAR), and so on. The passive remote sensing includes optical imaging, electro-optical imaging which further include Red-Green-Blue (RGB), multi-spectral imaging (for example, infrared (IR)), hyper spectral imaging, and so on.

Thus, the first domain and the second domain are within the active remote sensing (for example, Lidar as the first domain and SAR as the second domain, or vice versa), or within the passive remote sensing (for example, RGB as the first domain and IR second domain, multi-spectral images as the first domain and the hyper spectral images as the second domain, and so on), or between the active remote sensing and the passive remote sensing (for example, optical imaging as the first domain and SAR as the second domain, Lidar as the first domain and hyper spectral images as the second images, and so on).

The cross-domain CD (CDCD) is extremely technically challenging when the first domain and the second domain are between the active remote sensing and the passive remote sensing. For example, optical imaging as the first domain and SAR as the second domain, Lidar as the first domain and hyper spectral images as the second images, and so on, due to their differing modalities, which helps to provide complementary information.

In accordance with the present disclosure, the plurality of first images in the first domain, and the plurality of second images in the second domain, are received in the form of the image patches (partial images) with a predefined pixel of the spatio-temporal region. More specifically, the image patches of the spatio-temporal region contain one-to-one mapping in each of the first domain and the second domain. For example, for each image patch of the spatio-temporal region in the first domain, a corresponding image patch of the spatio-temporal region in the second domain is present (patch pairs). Thus, the corresponding image patch pairs are operated accordingly in the further steps of the method 300.

At step 304 of the method 300, the one or more hardware processors 104 of the system 100 are configured to pre-process the plurality of first images and the plurality of second images received at step 302 of the method 300, to obtain a plurality of pre-processed first images and a plurality of pre-processed second images, respectively. One or more image processing techniques are employed on each of the plurality of first images and the plurality of second images, to obtain the plurality of pre-processed first images and the plurality of pre-processed second images, respectively. In an embodiment, the one or more image processing techniques include but are not limited to: noise filtering, normalizing, phase correction, and atmospheric correction.

At step 306 of the method 300, the one or more hardware processors 104 of the system 100 are configured to generate a plurality of one-dimensional first image embeddings (*F_{first_domain}*) and a plurality of one-dimensional second image embeddings (*F*_{*second*_*domain*}), from the plurality of pre-processed first images and the plurality of pre-processed second images, respectively that are obtained at step 304 of the method 300. A pre-trained domain adaptive foundation model is employed to generate the plurality of one-dimensional first image embeddings (*F_{first_domain}*) and the plurality of one-dimensional second image embeddings (*F_{second_domain}*), from the plurality of pre-processed first images and the plurality of pre-processed second images.

Each patch pair from the first domain and the second domain (patch pair ((*first_domain, second_domain*)) is simultaneously fed into both the ReFM (DOFA) and the Siamese U-Net (SUN). The ReFM generates the plurality of one-dimensional first image embeddings (*F_{first_domain}*) and a plurality of one-dimensional second image embeddings (*F_{second_domain}*), for the first domain and the second domain, respectively, and are mathematically represented as in equation (1): $\begin{matrix}{F}_{first _ domain} ← ReFM \left(first_domain\right) \\ {F}_{second _ domain} ← ReFM \left(second_domain\right)\end{matrix}$ Where (*first_domain*), *second_domain* ∈ *R^{m×n×d}* for DOFA, height (*m*) = width (n) = 224, number of channels (d) = 3. Also, *F_{first_domain}, F_{Second_domain}* ∈ *R^{q},* for DOFA, *q* =768.

At step 308 of the method 300, the one or more hardware processors 104 of the system 100 are configured to generate a plurality of multi-dimensional encoder first image embeddings (*U_{first_domain}*) and a plurality of multi-dimensional decoder first image embeddings (*D_{first_domain}*), from the plurality of pre-processed first images. Further, the one or more hardware processors 104 of the system 100 are configured to generate a plurality of multi-dimensional encoder second image embeddings (*U_{second_domain}*) and a plurality of multi-dimensional decoder second image embeddings (*D_{second_domain}*)*,* from the plurality of pre-processed second images.

A Siamese UNET (SUN) consisting of an encoder unit (SUN-Enc) and a decoder unit (SUN-Dec) is employed to generate the respective image embeddings. More specifically, the encoder unit (SUN-Enc) of the Siamese UNET (SUN) is employed to generate the plurality of multi-dimensional encoder first image embeddings (*U_{first_domain}*) from the plurality of pre-processed first images and the plurality of multi-dimensional encoder second image embeddings (*U_{second_domain}*)*,* from the plurality of pre-processed second images. Similarly, the decoder unit (SUN-Dec) of the Siamese UNET (SUN) is employed to generate the plurality of multi-dimensional first decoder image embeddings (*U_{first_domain}*) from the plurality of pre-processed first images and the plurality of multi-dimensional decoder second image embeddings (*U_{second_domain}*)*,* from the plurality of pre-processed second images.

In an embodiment, the Siamese UNET (SUN) is employed with the weight sharing encoder units-decoder units. The sharing notion ensures that both the plurality of first images in the first domain (*first_domain*), and the plurality of second images in the second domain (*second_domain*) are mapped into the same encoded embedding space, enabling the generation of locally trained embeddings. The encoding unit (SUN-Enc) outputs from the SUN can be mathematically represented as in equation (2): ${U}_{first _ domain} , {U}_{second _ domain} ← SUN _ Enc \left(first_domain,second_domain\right)$ where *U_{first_domain}*, *U_{second_domain}* ∈ *R*^{*m*1×*n*1*d*1}*,* with *m*1,*n*1,*d*1 as the encoded patch dimensions.

Likewise, the decoder unit (SUN-Dec) outputs from the SUN can be mathematically represented as in equation (3): ${D}_{first _ domain} , {D}_{second _ domain} ← SUN _ Dec \left({U}_{first _ domain}, {U}_{second _ domain}\right)$ where *D_{first_domain}*, *D_{second_domain}* ∈ *R*^{*m*×*n*×*d*} are the decoder outputs that match the dimensions of the original input.

At step 310 of the method 300, the one or more hardware processors 104 of the system 100 are configured to generate a first binary change map (*M_{G}*) from the plurality of multi-dimensional decoder first image embeddings (*D_{first_domain}*) and the plurality of multi-dimensional decoder second image embeddings (*D*_{*second*_*domain*}) generated at step 308 of the method 300. The Gabor jet based Dissimilarity Checker (GDC) is employed to generate the first binary change map (*M_{G}*) from the plurality of multi-dimensional decoder first image embeddings (*D_{first_domain}*) and the plurality of multi-dimensional decoder second image embeddings (*D_{second_domain}*)*.*

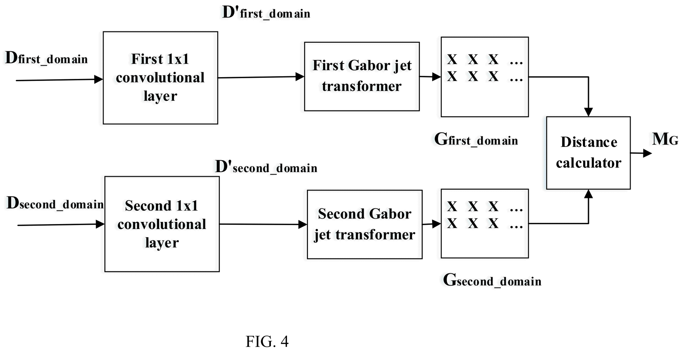

FIG. 4 is an exemplary block diagram of the Gabor jet based Dissimilarity Checker (GDC), in accordance with some embodiments of the present disclosure. As shown in FIG. 4, the Gabor jet based Dissimilarity Checker (GDC) includes a first 1x1 convolutional layer, a second 1x1 convolutional layer, a first Gabor jet transformer, a second Gabor jet transformer, and a distance calculator.

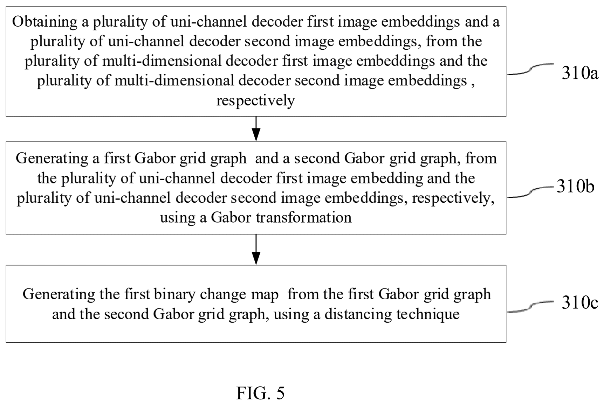

FIG. 5 is a flowchart showing the steps for generating the first binary change map (*M_{G}*) using the Gabor jet based Dissimilarity Checker (GDC) of FIG. 4, in accordance with some embodiments of the present disclosure. As shown in FIG. 5, generating the first binary change map (*M_{G}*)*,* using the Gabor jet based Dissimilarity Checker (GDC) is explained through steps 310a to 310b.

At step 310a, a plurality of uni-channel decoder first image embeddings ( ${D}_{first _ domain}^{′}$) and a plurality of uni-channel decoder second image embeddings ( ${D}_{second _ domain}^{′}$)*,* are obtained from the plurality of multi-dimensional decoder first image embeddings (*D_{first_domain}*) and the plurality of multi-dimensional decoder second image embeddings (*D_{second_domain}*)*,* respectively. More specifically, the plurality of multi-dimensional decoder first image embeddings (*D_{first_domain}*) are passed through the first 1x1 convolutional layer of the GDC to generate the plurality of uni-channel decoder first image embeddings ( ${D}_{first _ domain}^{′}$). Similarly, the plurality of multi-dimensional decoder second image embeddings (*D_{second_domain}*) are passed through the second 1x1 convolutional layer of the GDC to generate the plurality of uni-channel decoder second image embeddings ( ${D}_{second _ domain}^{′}$)

The GDC takes the decoder outputs consisting of the plurality of multi-dimensional decoder first image embeddings (*D_{first_}*domain) and the plurality of multi-dimensional decoder second image embeddings (*D_{second_domain}*)*,* from the SUN-Dec as input at this step. These outputs are processed through 1x1 Convolutions, yielding reduced uni-channel representations ( ${D}_{first _ domain}^{′} , {D}_{second _ domain}^{′} ∈ {ℝ}^{m \times n \times 1}$) that retain the original spatial dimensions.

At step 310b, a first Gabor grid graph (*G_{first_domain}*) and a second Gabor grid graph (*G_{second_domain}*), are generated from the plurality of uni-channel decoder first image embedding ( ${D}_{first _ domain}^{′}$) and the plurality of uni-channel decoder second image embeddings ( ${D}_{second _ domain}^{′}$)*,* respectively. A Gabor transformation is applied to the plurality of uni-channel decoder first image embedding ( ${D}_{first _ domain}^{′}$) and the plurality of uni-channel decoder second image embeddings ( ${D}_{second _ domain}^{′}$), to generate the first Gabor grid graph (*G_{first_domain}*) and the second Gabor grid graph (*G_{second_domain}*) respectively.

More specifically, the first Gabor jet transformer of the GDC performs the Gabor transformation on the plurality of uni-channel decoder first image embedding ( ${D}_{first _ domain}^{′}$) that is obtained at step 310a, to generate the first Gabor grid graph (*G_{first_domain}*). Similarly, the second Gabor jet transformer of the GDC performs the Gabor transformation on the plurality of uni-channel decoder second image embeddings ( ${D}_{second _ domain}^{′}$) that are obtained at step 310a, to generate the second Gabor grid graph (*G_{second_domain}*).

A Gabor jet for an image I is formed by concatenating the responses of all Gabor wavelets at a specific position *̅t̅*̅ into a single vector. Using this principle, the Gabor grid graph *G_{first_domain}* is constructed from the Gabor transform of the plurality of the uni-channel decoder first image embedding ( ${D}_{first _ domain}^{′}$) , represented as a set of jets {*J*₁, *J*₂*, ... ,Jₜ*} where *t* = m × *n,* corresponding to the number of Gabor jets calculated at each grid spacing. Similarly, the Gabor grid graph *G_{second_domain}* is created from the plurality of uni-channel decoder second image embeddings ( ${D}_{second _ domain}^{′}$).

At step 310c, the first binary change map (*M_{G}*) from the first Gabor grid graph (*G_{first_domain}*) and the second Gabor grid graph (*G_{second_domain}*) generated at step 310b, using a distancing technique. More specifically, the distance calculator of the GDC applies to the distancing technique which calculate a distance between the first Gabor grid graph (*G_{first_domain}*) and the second Gabor grid graph (*G_{second_domain}*) and generates the first binary change map (*M_{G}*).

The distancing technique is used for calculating the distances between the corresponding normalized jets of the first Gabor grid graph (*G_{first_domain}*) and the second Gabor grid graph (*G_{second_domain}*)*.* In an embodiment, Canberra distance is employed as the distancing technique which calculates the distance between the normalized jets is that its value lies within the range [0, 1], which facilitates binarization. Specifically, distances ≥ 0.5 are set to 1, while all other values are set to 0. Mathematically, the distance calculation can be expressed as in equation (8): ${M}_{G} ← Dist Calc \left({G}_{first _ domain}, {G}_{second _ domain}\right)$ Where *M_{G}* ∈ {0,1}^{*m*×*n*} represents the binary change matrix produced by the GDC, maintaining the same spatial dimensions as the original input.

At step 312 of the method 300, the one or more hardware processors 104 of the system 100 are configured to generate a second binary change map (*M_{K}*) from the plurality of multi-dimensional encoder first image embeddings (*U_{first_domain}*)*,* and the plurality of multi-dimensional encoder second image embeddings (*U_{second_domain}*) generated at step 308 of the method 300, and the plurality of one-dimensional first image embeddings (*F_{first_domain}*), and the plurality of one-dimensional second image embeddings (*F_{second_domain}*), generated at step 306 of the method 300. A Kolmogorov-Arnold Network (KAN)-based Convolutional Neural Network (CNN) classifier (KCC) is employed to generate the generate the second binary change map (*M_{K}*).

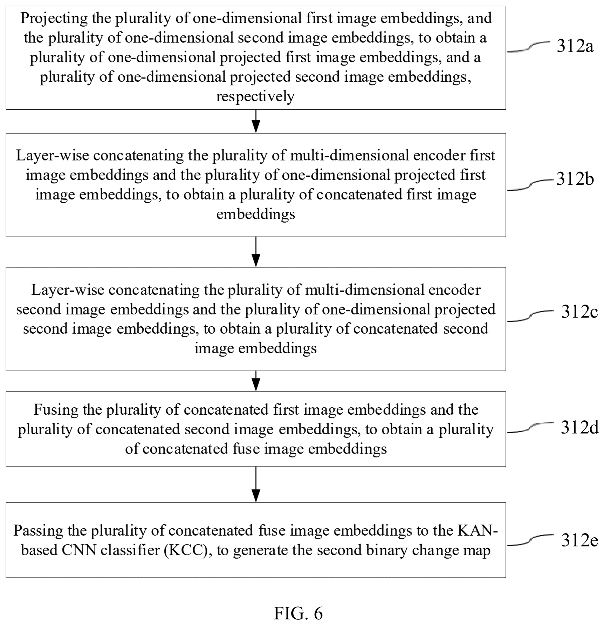

FIG. 6 is a flowchart showing the steps for generating the second binary change map (*M_{K}*) using a Kolmogorov-Arnold Network (KAN)-based Convolutional Neural Network (CNN) classifier (KCC), in accordance with some embodiments of the present disclosure. At step 312a, the plurality of one-dimensional first image embeddings (*F_{first_domain}*), and the plurality of one-dimensional second image embeddings (*F_{second_domain}*) are projected to obtain a plurality of one-dimensional projected first image embeddings ( ${F}_{first _ domain}^{′}$), and a plurality of one-dimensional projected second image embeddings ( ${F}_{second _ domain}^{′}$), respectively.

The plurality of one-dimensional first image embeddings (*F_{first_domain}*)*,* and the plurality of one-dimensional second image embeddings (*F_{second_domain}*) from the ReFM are processed through projection (*Prj)* modules, each consisting of Linear, ReLU, and Dropout layers, to align their dimensions with the multi-dimensional *U_{first_domain}* and *U_{second_domαin}* for future concatenation. The plurality of one-dimensional projected first image embeddings ( ${F}_{first _ domain}^{′}$), and the plurality of one-dimensional projected second image embeddings ( ${F}_{second _ domain}^{′}$) are mathematically represented as in equation (4) $\begin{matrix}{F}_{first _ domain}^{′} ← Prj \left({F}_{first _ domain}\right) \\ {F}_{second _ domain}^{′} ← Prj \left({F}_{first _ domain}\right)\end{matrix}$ Where ${F}_{first _ domain}^{′} , {F}_{second _ domain}^{′} ∈ {ℝ}^{m 1 \times n 1 \times d 1}$

At step 312b, a layer-wise concatenation (*Conc*) is performed to the plurality of multi-dimensional encoder first image embeddings (*U_{first_domain}*) and the plurality of one-dimensional projected first image embeddings ( ${F}_{first _ domain}^{′}$), to obtain a plurality of concatenated first image embeddings (*C_{first_domain}*).

At step 312c, the layer-wise concatenation (*Conc*) is performed to the plurality of multi-dimensional encoder second image embeddings (*U_{second_domain}*) and the plurality of one-dimensional projected second image embeddings ( ${F}_{second _ domain}^{′}$), to obtain a plurality of concatenated second image embeddings (*C_{second_domain}*).

The plurality of concatenated first image embeddings (*C_{first_domain}*) obtained at step 312a and the plurality of concatenated second image embeddings (*C_{second_domain}*) obtained at this step of 312b are mathematically represented as in equation (5) $\begin{matrix}{C}_{first _ domain} ← Conc \left({U}_{first _ domain}, {F}_{first _ domain}^{′}\right) \\ {C}_{second _ domain} ← Conc \left({U}_{second _ domain}, {F}_{second _ domain}^{′}\right)\end{matrix}$ Where *C_{first_domain}, C_{second_domain}* ∈ *R*^{*m*1×*n*1×2*d*1}.

At step 312d, the plurality of concatenated first image embeddings (*C_{first_domain}*) obtained at step 312b and the plurality of concatenated second image embeddings (*C_{second_domain}*) obtained at step 312c, are fused to obtain a plurality of concatenated fuse image embeddings (*S_{W}*). The plurality of concatenated first image embeddings (*C_{first_domain}*) and the plurality of concatenated second image embeddings (*C_{second_domain}*) are then processed through a weighted linear layer, performing a weighted addition (*Add*) of *C_{first_domain}* and *C_{second_domain}.* The plurality of concatenated fuse image embeddings (*S_{W}*) is mathematically represented as in equation (5); ${S}_{W} ← Add \left({C}_{first _ domain}, {C}_{second _ domain}, W\right)$ Where *S_{W}* ∈ *R*^{*m*1×*n*1×2*d*1}*,* and *W* represents the weights used in the operation.

At step 312e, the plurality of concatenated fuse image embeddings (*S_{W}*) obtained at step 312d is passed to the KAN-based CNN classifier (KCC), to generate the second binary change map (*M_{K}*). The plurality of concatenated fuse image embeddings (*S_{W}*) resulted from the step 312d serves as an input to the KCC. In an embodiment, a FastFCN Head with KAN and also with a Multi-Layer Perceptron (MLP) is employed in the present disclosure instead of using a conventional CNN classifier, where the KAN-based approach demonstrated a better performance. The second binary change map (*M_{K}*) is mathematically represented as in equation (7): ${M}_{K} ← KCC \left({S}_{W}\right)$ Where *M_{K}* ∈ {0,1}^{*m*×*n*} is the binary change-matrix from the KCC, matching the spatial dimensions of the original input.

At step 314 of the method 300, the one or more hardware processors 104 of the system 100 are configured to determine a binary change detection map from the first binary change map (*M_{G}*) generated at step 310 of the method 300 and the second binary change map (*M_{K}*) generated at step 312 of the method 300. An element-wise multiplication is performed between the first binary change map (*M_{G}*) and the second binary change map (*M_{K}*) to determine the binary change detection map.

The between the first binary change map (*M_{G}*) and the second binary change map (*M_{K}*) generated from the KCC and GDC respectively, are element-wise multiplied (*Mult*) to produce the binary change detection map. The binary change detection map is mathematically represented as in equation (9): $Binary change detection map ← Mult \left({M}_{K}, {M}_{G}\right)$ Here, Binary change detection map ∈ {0,1}^{*m*×*n*} represents the final binary change detection map output from the ReFUjetNet.

At step 316 of the method 300, the one or more hardware processors 104 of the system 100 are configured to detect the one or more changes occurred due to the one or more events in the spatio-temporal region, from the binary change detection map determined at step 314 of the method 300. This map identifies changes (value 1) only in areas where both KCC and GDC detect changes within the spatio-temporal region, serving as a consolidated output combining the insights of both modules.

The methods and systems of the present disclosure enables to detect the changes accurately within the spatio-temporal region provided in two different domains especially in cross-domain change detection (CDCD) such as optical and SAR images using the ReFUjetNet. The integration of a pre-trained remote-sensing foundation model (ReFM) with a locally trainable Siamese U-Net within a unified deep learning framework, enable effective fusion of the cross-domain image embeddings (SAR and optical image embeddings) for the change detection in the remote sensing applications. Further, the application of the Gabor jet concept as a dissimilarity checker within a deep learning architecture accurately generate the change detection map between the cross-domain images (SAR and optical images). Further, the distinctive use of the Siamese U-Net, where encoding unit outputs are fused to generate the ReFM-based binary change matrix (secondary binary change map), while decoder outputs are employed for generating the Gabor jet-based binary change map ((first) binary change map) accurately generate the change detection map between the cross-domain images (SAR and optical images).

### Example Scenario:

To validate the effectiveness of the proposed framework (ReFUjetNet) of the present disclosure, two widely recognized benchmark datasets: (a) a first dataset and (b) a second dataset, were utilized. Both the datasets consist of optical and SAR image pairs, captured before and after flooding events, respectively. The first dataset includes pre-flood imagery from Quickbird 2 (July 2006) and post flood imagery from TerraSAR-X (July 2007). Similarly, the second dataset focuses on land cover changes due to the 2017 floods, combining SAR data from Sentinel-1A with optical imagery from Landsat 8.

Each dataset is partitioned into training and testing sets with an 80:20 ratio. The training set is then subdivided into 90% for actual training and 10% for validation. In all cases, a stratified splitting approach was applied. The network models of the ReFUjetNet were trained and evaluated using the PyTorch 2.3.0 deep learning framework on an A5500 GPU, with a ReduceLROnPlateau scheduler managing the learning rate during training. A Binary Cross Entropy Loss was employed as the loss function. The training was performed for 100 epochs with a batch size of 6.

The performance of ReFUjetNet is assessed using the two benchmark datasets, against various current State-of-the-Art (SOTA) techniques including HPT, SCCN, cGAN, Ace net, X-Net, DTCDN, MTCDN (S), and MTCDN (O) and the results are presented here. The experimental results were presented in the form of Precision, Recall, F1-score, and Overall Accuracy (OA) as evaluation metrics.

Table 1 shows the performance results of the present disclosure (ReFUjetNet) and the current State-of-the-Art (SOTA) techniques on the first dataset. All scores are in percentage. The best score and the second-best score in each metric are emboldened and italicized respectively. As shown in Table 1, the present disclosure (ReFUjetNet) outperforms all the listed current State-of-the-Art (SOTA) techniques across all evaluated metrics, surpassing both the DTCDN and MTCDN.

**Table 1**

| Methods | Precision | Recall | F1 | OA |
|---|---|---|---|---|
| HPT [13] | 31.75 | 65.18 | 42.68 | 82.46 |
| SCCN [14] | 59.74 | 61.68 | 60.70 | 91.99 |
| cGAN [15] | 33.84 | 68.68 | 45.34 | 83.42 |
| ACE Net [16] | 65.65 | 70.73 | 68.10 | 93.35 |
| X-Net [16] | 66.26 | 78.75 | 71.97 | 93.85 |
| DTCDN [17] | *89.96* | *89.93* | *89.95* | *97.98* |
| MTCDN (S) [18] | 87.69 | 85.10 | 86.38 | 97.31 |
| MTCDN (O) [18] | 88.86 | 87.59 | 88.22 | 97.65 |
| ReFUjetNet | 90.54 | 90.32 | 90.43 | 98.21 |

Table 2 shows the performance results of the present disclosure (ReFUjetNet) and the current State-of-the-Art (SOTA) techniques on the second dataset. All scores are in percentage. The best score and the second-best score in each metric are emboldened and italicized respectively. As shown in Table 2, Except a few, ReFUjetNet of the present disclosure outperforms most SOTA methods across nearly all the metrics. Although DTCDN achieves slightly higher precision, ReFUjetNet of the present disclosure surpasses it in recall and F1-score. Similarly, while MTCDN (S) has a marginally better Overall Accuracy (OA), ReFUjetNet of the present disclosure outshines it in all other metrics.

**Table 2**

| Methods | Precision | Recall | F1 | OA |
|---|---|---|---|---|
| HPT [13] | 53.95 | 51.32 | 52.60 | 96.62 |
| SCCN [14] | 31.11 | 54.01 | 39.47 | 84.55 |
| cGAN [15] | 32.43 | 59.20 | 41.91 | 92.82 |
| ACE Net [16] | 30.59 | 76.49 | 43.71 | 91.38 |
| X-Net [16] | 35.34 | 59.11 | 44.24 | 90.83 |
| DTCDN [17] | 66.73 | 78.24 | 72.03 | 97.61 |
| MTCDN (S) [18] | 65.47 | *80.61* | *72.26* | 97.83 |
| MTCDN (O) [18] | 55.20 | 69.52 | 61.54 | 95.83 |
| ReFUjetNet | *66.01* | 81.37 | 72.89 | *97.69* |

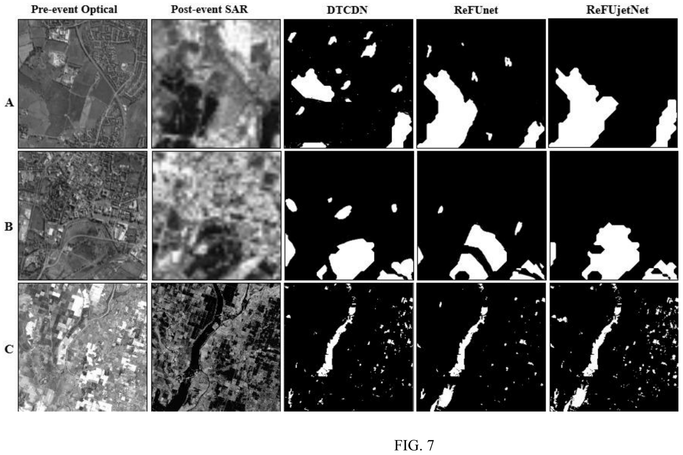

FIG. 7 shows comparison results of the binary change-maps of a few samples from the first dataset and the second dataset, in accordance with some embodiments of the present disclosure. As shown in FIG. 7, the columns from left to right reflects Pre-event Optical image, Post-event SAR image, binary change-maps as estimated by DTCDN, ReFUjetNet and ground-truth change map respectively. Row-A and Row-B are samples from the first dataset and Row-C is from the second dataset. Overall, the proposed architecture ReFUjetNet surpasses the performance of current State-of-the-Art (SOTA) techniques on two benchmark datasets, underscoring its effectiveness, robustness, and adaptability.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problems of cross-domain based change detection of region due to the event. The methods and system of the present disclosure propose a deep-learning (DL) architecture called ReFUjetNet, which integrates a pre-trained domain adaptive foundation model with a locally trainable Siamese U-Net and a Gabor jet-based dissimilarity checker in a single network for change detection between two cross-domain sensing images such as between optical and SAR images.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (300), comprising:
receiving, via one or more input/output (I/O) interfaces, (i) a plurality of first images in a first domain (*first_domain*), and (ii) a plurality of second images in a second domain (*second_domain*), of a spatio-temporal region in which one or more changes occurred due to one or more events (302);
pre-processing, via one or more hardware processors, the plurality of first images and the plurality of second images, using one or more image processing techniques, to obtain a plurality of pre-processed first images and a plurality of pre-processed second images, respectively (304);
generating, via the one or more hardware processors, a plurality of one-dimensional first image embeddings (*F_{first_domain}*) and a plurality of one-dimensional second image embeddings (*F_{second_domain}*), from the plurality of pre-processed first images and the plurality of pre-processed second images, respectively, using a domain adaptive foundation model (306);
generating, via the one or more hardware processors, (i) a plurality of multi-dimensional encoder first image embeddings (*U_{first_domain}*) and a plurality of multi-dimensional decoder first image embeddings (*D_{first_domain}*) from the plurality of pre-processed first images, (ii) a plurality of multi-dimensional encoder second image embeddings (*U_{second_domain}*) and a plurality of multi-dimensional decoder second image embeddings (*D_{second_domain}*) from the plurality of pre-processed second images, using an encoder unit (SUN-Enc) and a decoder unit (SUN-Dec) of a Siamese UNET (SUN) (308);
generating, via the one or more hardware processors, a first binary change map (*M_{G}*) from the plurality of multi-dimensional decoder first image embeddings (*D_{first_domain}*) and the plurality of multi-dimensional decoder second image embeddings (*D_{second_domain}*), using a Gabor jet based Dissimilarity Checker (GDC) (310);
generating, via the one or more hardware processors, a second binary change map (*M_{K}*) from the plurality of multi-dimensional encoder first image embeddings (*U_{first_domain}*), the plurality of multi-dimensional encoder second image embeddings (*U_{second_domain}*)*,* the plurality of one-dimensional first image embeddings (*F_{first_domain}*), and the plurality of one-dimensional second image embeddings (*F_{second_domain}*), using a Kolmogorov-Arnold Network (KAN)-based Convolutional Neural Network (CNN) classifier (KCC) (312);
determining, via the one or more hardware processors, a binary change detection map from the first binary change map (*M_{G}*) and the second binary change map (*M_{K}*)*,* by element-wise multiplication (314); and
detecting, via the one or more hardware processors, the one or more changes occurred due to the one or more events in the spatio-temporal region, from the binary change detection map (316).

2. The processor-implemented method (300) as claimed in claim 1, wherein:
the plurality of first images received in the first domain *(first_domain)* is of the spatio-temporal region before the one or more events occurred, and
the plurality of second images received in the second domain (*second_domain*) is of the spatio-temporal region after the one or more events occurred.

3. The processor-implemented method (300) as claimed in claim 1, wherein generating the first binary change map (*M_{G}*) from the plurality of multi-dimensional decoder first image embeddings (*D_{first_domain}*) and the plurality of multi-dimensional decoder second image embeddings (*D_{second_domain}*), using the Gabor jet based Dissimilarity Checker (GDC), comprises:
obtaining a plurality of uni-channel decoder first image embeddings ( ${D}_{first _ domain}^{′}$) and a plurality of uni-channel decoder second image embeddings ( ${D}_{second _ domain}^{′}$)*,* from the plurality of multi-dimensional decoder first image embeddings (*D_{first_domain}*) and the plurality of multi-dimensional decoder second image embeddings (*D_{second_domain}*) respectively (310a);
generating a first Gabor grid graph (*G_{first_domαin}*) and a second Gabor grid graph (*G_{second_domain}*)*,* from the plurality of uni-channel decoder first image embedding ( ${D}_{first _ domain}^{′}$) and the plurality of uni-channel decoder second image embeddings ( ${D}_{second _ domain}^{′}$)*,* respectively, using a Gabor transformation (310b); and
generating the first binary change map (*M_{G}*) from the first Gabor grid graph (*G_{first_domain}*) and the second Gabor grid graph (*G_{second_domain}*)*,* using a distancing technique (310c).

4. The processor-implemented method (300) as claimed in claim 1, wherein generating the second binary change map (*M_{K}*) from the plurality of multi-dimensional encoder first image embeddings (*U_{first_domain}*), the plurality of multi-dimensional encoder second image embeddings (*U_{second_domain}*), the plurality of one-dimensional first image embeddings (*F_{first_domain}*), and the plurality of one-dimensional second image embeddings (*F_{second_domain}*), using the KAN-based CNN classifier (KCC), comprises:
projecting the plurality of one-dimensional first image embeddings (*F_{first_domain}*), and the plurality of one-dimensional second image embeddings (*F_{second_domain}*), to obtain a plurality of one-dimensional projected first image embeddings ( ${F}_{first _ domain}^{′}$), and a plurality of one-dimensional projected second image embeddings ( ${F}_{second _ domain}^{′}$), respectively (312a);
layer-wise concatenating the plurality of multi-dimensional encoder first image embeddings (*U_{first_domain}*) and the plurality of one-dimensional projected first image embeddings ( ${F}_{first _ domain}^{′}$), to obtain a plurality of concatenated first image embeddings (*C_{first_domain}*) (312b);
layer-wise concatenating the plurality of multi-dimensional encoder second image embeddings (*U_{second_domain}*) and the plurality of one-dimensional projected second image embeddings ( ${F}_{second _ domain}^{′}$), to obtain a plurality of concatenated second image embeddings (*C_{second_domain}*) (312c);
fusing the plurality of concatenated first image embeddings (*C_{first_domain}*) and the plurality of concatenated second image embeddings (*C_{second_domain}*), to obtain a plurality of concatenated fuse image embeddings (*S_{W}*)(312d); and
passing the plurality of concatenated fuse image embeddings (*S_{W}*) to the KAN-based CNN classifier (KCC), to generate the second binary change map (*M_{K}*) (312e).

5. A system (100), comprising:
a memory (102) storing instructions;
one or more input/output (I/O) interfaces (106); and
one or more hardware processors (104) coupled to the memory (102) via the one or more I/O interfaces (106), wherein the one or more hardware processors (104) are configured by the instructions to:
receive, via the one or more I/O interfaces (106), (i) a plurality of first images in a first domain (*first_domain*), and (ii) a plurality of second images in a second domain *(second_domain),* of a spatio-temporal region in which one or more changes occurred due to one or more events;
pre-process the plurality of first images and the plurality of second images, using one or more image processing techniques, to obtain a plurality of pre-processed first images and a plurality of pre-processed second images, respectively;
generate a plurality of one-dimensional first image embeddings (*F_{first_domain}*) and a plurality of one-dimensional second image embeddings (*F_{second_domain}*), from the plurality of pre-processed first images and the plurality of pre-processed second images, respectively, using a domain adaptive foundation model;
generate (i) a plurality of multi-dimensional encoder first image embeddings (*U_{first_domain}*) and a plurality of multi-dimensional decoder first image embeddings (*D_{first_domain}*) from the plurality of pre-processed first images, (ii) a plurality of multi-dimensional encoder second image embeddings (*U_{second_domain}*) and a plurality of multi-dimensional decoder second image embeddings (*D_{second_domain}*) from the plurality of pre-processed second images, using an encoder unit (SUN-Enc) and a decoder unit (SUN-Dec) of a Siamese UNET (SUN);
generate a first binary change map (*M_{G}*) from the plurality of multi-dimensional decoder first image embeddings (*D_{first_domain}*) and the plurality of multi-dimensional decoder second image embeddings (*D_{second_domain}*), using a Gabor jet based Dissimilarity Checker (GDC);
generate a second binary change map (*M_{K}*) from the plurality of multi-dimensional encoder first image embeddings (*U_{first_domain}*), the plurality of multi-dimensional encoder second image embeddings (*U_{second_domain}*), the plurality of one-dimensional first image embeddings (*F_{first_domain}*), and the plurality of one-dimensional second image embeddings (*F_{second_domain}*), using a Kolmogorov-Arnold Network (KAN)-based Convolutional Neural Network (CNN) classifier (KCC);
determine a binary change detection map from the first binary change map (*M_{G}*) and the second binary change map (*M_{K}*)*,* by element-wise multiplication; and
detect the one or more changes occurred due to the one or more events in the spatio-temporal region, from the binary change detection map.

6. The system (100) as claimed in claim 5, wherein:
the plurality of first images received in the first domain *(first_domain)* is of the spatio-temporal region before the one or more events occurred, and
the plurality of second images received in the second domain (*second_domain*) is of the spatio-temporal region after the one or more events occurred.

7. The system (100) as claimed in claim 5, wherein the one or more hardware processors (104) are configured generate the first binary change map (*M_{G}*) from the plurality of multi-dimensional decoder first image embeddings (*D_{first_domain}*) and the plurality of multi-dimensional decoder second image embeddings (*D_{second_domain}*)*,* using the Gabor jet based Dissimilarity Checker (GDC), by:
obtaining a plurality of uni-channel decoder first image embeddings ( ${D}_{first _ domain}^{′}$) and a plurality of uni-channel decoder second image embeddings ( ${D}_{second _ domain}^{′}$), from the plurality of multi-dimensional decoder first image embeddings (*D_{first_domain}*) and the plurality of multi-dimensional decoder second image embeddings (*D_{second_domain}*) respectively;
generating a first Gabor grid graph (*G_{first_domαin}*) and a second Gabor grid graph (*G_{second_domain}*)*,* from the plurality of uni-channel decoder first image embedding ( ${D}_{first _ domain}^{′}$) and the plurality of uni-channel decoder second image embeddings ( ${D}_{second _ domain}^{′}$), respectively, using a Gabor transformation; and
generating the first binary change map (*M_{G}*) from the first Gabor grid graph (*G_{first_domain}*) and the second Gabor grid graph (*G_{second_domain}*)*,* using a distancing technique.

8. The system (100) as claimed in claim 5, wherein the one or more hardware processors (104) are configured to generate the second binary change map (*M_{K}*) from the plurality of multi-dimensional encoder first image embeddings (*U_{first_domain}*), the plurality of multi-dimensional encoder second image embeddings (*U_{second_domain}*)*,* the plurality of one-dimensional first image embeddings (*F_{first_domain}*), and the plurality of one-dimensional second image embeddings (*F_{second_domain}*)*,* using the KAN-based CNN classifier (KCC), by:
projecting the plurality of one-dimensional first image embeddings (*F_{first_domain}*), and the plurality of one-dimensional second image embeddings (*F_{second_domain}*), to obtain a plurality of one-dimensional projected first image embeddings ( ${F}_{first _ domain}^{′}$), and a plurality of one-dimensional projected second image embeddings ( ${F}_{second _ domain}^{′}$), respectively;
layer-wise concatenating the plurality of multi-dimensional encoder first image embeddings (*U_{first_domain}*) and the plurality of one-dimensional projected first image embeddings ( ${F}_{first _ domain}^{′}$), to obtain a plurality of concatenated first image embeddings (*C_{first_domain}*);
layer-wise concatenating the plurality of multi-dimensional encoder second image embeddings (*U_{second_domain}*) and the plurality of one-dimensional projected second image embeddings ( ${F}_{second _ domain}^{′}$), to obtain a plurality of concatenated second image embeddings (*C_{second_domain}*);
fusing the plurality of concatenated first image embeddings (*C_{first_domain}*) and the plurality of concatenated second image embeddings (*C_{second_domain}*), to obtain a plurality of concatenated fuse image embeddings (*S_{W}*); and
passing the plurality of concatenated fuse image embeddings (*S_{W}*) to the KAN-based CNN classifier (KCC), to generate the second binary change map (*M_{K}*).

9. One or more non-transitory machine-readable information storage mediums comprising one or more instructions which when executed by one or more hardware processors cause:
receiving, via one or more input/output (I/O) interfaces, (i) a plurality of first images in a first domain (*first_domain*), and (ii) a plurality of second images in a second domain (*second_domain*), of a spatio-temporal region in which one or more changes occurred due to one or more events;
pre-processing the plurality of first images and the plurality of second images, using one or more image processing techniques, to obtain a plurality of pre-processed first images and a plurality of pre-processed second images, respectively;
generating, via the one or more hardware processors, a plurality of one-dimensional first image embeddings (*F_{first_domain}*) and a plurality of one-dimensional second image embeddings (*F_{second_domain}*), from the plurality of pre-processed first images and the plurality of pre-processed second images, respectively, using a domain adaptive foundation model;
generating (i) a plurality of multi-dimensional encoder first image embeddings (*U*_{*first*_*domain*}) and a plurality of multi-dimensional decoder first image embeddings (*D_{first_domain}*) from the plurality of pre-processed first images, (ii) a plurality of multi-dimensional encoder second image embeddings (*U_{second_domain}*) and a plurality of multi-dimensional decoder second image embeddings (*D_{second_domain}*) from the plurality of pre-processed second images, using an encoder unit (SUN-Enc) and a decoder unit (SUN-Dec) of a Siamese UNET (SUN);
generating a first binary change map (*M_{G}*) from the plurality of multi-dimensional decoder first image embeddings (*D_{first_domain}*) and the plurality of multi-dimensional decoder second image embeddings (*D_{second_domain}*), using a Gabor jet based Dissimilarity Checker (GDC);
generating a second binary change map (*M_{K}*) from the plurality of multi-dimensional encoder first image embeddings (*U_{first_domain}*), the plurality of multi-dimensional encoder second image embeddings (*U_{second_domain}*) the plurality of one-dimensional first image embeddings (*F_{first_domain}*), and the plurality of one-dimensional second image embeddings (*F_{second_domain}*), using a Kolmogorov-Arnold Network (KAN)-based Convolutional Neural Network (CNN) classifier (KCC);
determining a binary change detection map from the first binary change map (*M_{G}*) and the second binary change map (*M_{K}*)*,* by element-wise multiplication; and
detecting the one or more changes occurred due to the one or more events in the spatio-temporal region, from the binary change detection map.

10. The one or more non-transitory machine readable information storage mediums as claimed in claim 9, wherein:
the plurality of first images received in the first domain (*first_domain*) is of the spatio-temporal region before the one or more events occurred, and
the plurality of second images received in the second domain (*second_domain*) is of the spatio-temporal region after the one or more events occurred.

11. The one or more non-transitory machine readable information storage mediums as claimed in claim 9, wherein generating the first binary change map (*M_{G}*) from the plurality of multi-dimensional decoder first image embeddings (*D_{first_domain}*) and the plurality of multi-dimensional decoder second image embeddings (*D_{second_domain}*)*,* using the Gabor jet based Dissimilarity Checker (GDC), comprises:
obtaining a plurality of uni-channel decoder first image embeddings ( ${D}_{first _ domain}^{′}$) and a plurality of uni-channel decoder second image embeddings ( ${D}_{second _ domain}^{′}$), from the plurality of multi-dimensional decoder first image embeddings (*D_{first_domain}*) and the plurality of multi-dimensional decoder second image embeddings (*D_{second_domain}*) respectively;
generating a first Gabor grid graph (*G_{first_domαin}*) and a second Gabor grid graph (*G_{second_domain}*)*,* from the plurality of uni-channel decoder first image embedding ( ${D}_{first _ domain}^{′}$) and the plurality of uni-channel decoder second image embeddings ( ${D}_{second _ domain}^{′}$)*,* respectively, using a Gabor transformation; and
generating the first binary change map (*M_{G}*) from the first Gabor grid graph (*G_{first_domain}*) and the second Gabor grid graph (*G_{second_domain}*)*,* using a distancing technique.

12. The one or more non-transitory machine readable information storage mediums as claimed in claim 9, wherein generating the second binary change map (*M_{K}*) from the plurality of multi-dimensional encoder first image embeddings (*U_{first_domain}*), the plurality of multi-dimensional encoder second image embeddings (*U_{second_domain}*)*,* the plurality of one-dimensional first image embeddings (*F_{first_domain}*), and the plurality of one-dimensional second image embeddings (*F_{second_domain}*)*,* using the KAN-based CNN classifier (KCC), comprises:
projecting the plurality of one-dimensional first image embeddings (*F_{first_domain}*), and the plurality of one-dimensional second image embeddings (*F_{second_domain}*), to obtain a plurality of one-dimensional projected first image embeddings ( ${F}_{first _ domain}^{′}$), and a plurality of one-dimensional projected second image embeddings ( ${F}_{second _ domain}^{′}$), respectively;
layer-wise concatenating the plurality of multi-dimensional encoder first image embeddings (*U_{first_domain}*) and the plurality of one-dimensional projected first image embeddings ( ${F}_{first _ domain}^{′}$), to obtain a plurality of concatenated first image embeddings (*C_{first_domain}*);
layer-wise concatenating the plurality of multi-dimensional encoder second image embeddings (*U_{second_domain}*) and the plurality of one-dimensional projected second image embeddings ( ${F}_{second _ domain}^{′}$), to obtain a plurality of concatenated second image embeddings (*C_{second_domain}*);
fusing the plurality of concatenated first image embeddings (*C_{first_domain}*) and the plurality of concatenated second image embeddings (*C_{second_domain}*), to obtain a plurality of concatenated fuse image embeddings (*S_{W}*); and
passing the plurality of concatenated fuse image embeddings (*S_{W}*) to the KAN-based CNN classifier (KCC), to generate the second binary change map (*M_{K}*).
